# EUROPEAN PATENT SPECIFICATION

(11) **EP 2 263 919 B1**
(45) Date of publication and mention of the grant of the patent: **09.05.2012**
(21) Application number: 10165473.9
(22) Date of filing: 10.06.2010
(51) Int. Cl.: B60R 19/26, B60R 19/34, B62D 21/15

(54) **Automobile front body structure**
Vorderteilkonstruktion eines Automobils
Structure de corps avant d'automobile

(30) Priority: 10.06.2009 JP 2009139601
(43) Date of publication of application: 22.12.2010
(73) Proprietor: Honda Motor Co., Ltd., Tokyo 107-8556 (JP)
(72) Inventor: Kashiwagi, Masakazu, Saitama 351-0193 (JP); Takahashi, Koji, Saitama 351-0193 (JP)
(74) Representative: Beder, Jens

(56) References cited:
- EP-A2- 0 888 953
- EP-A2- 1 149 756
- FR-A5- 2 107 158
- JP-A- 2007 190 964

## Description

The present invention relates to a vehicle front body structure having a bumper beam extension disposed between a bumper beam and a front side frame for absorbing an impact applied to a front part of the vehicle body.

Vehicle front body structures of the type having a bumper beam supported at the front end of a front side frame via a bumper beam extension are known and used heretofore. The known vehicle front body structures are generally designed such that when an own vehicle is subjected to a light or low-speed collision with an oncoming vehicle, the bumper beam extension yields to absorb a collision impact to thereby protect a main frameworks including the front side frame against deformation or damage. One example of the known vehicle front body structures is disclosed in Japanese Patent Application Laid-Open Publication No. 2007-190964 (JP-A 2007-190964).

The disclosed vehicle front body structure includes a front side frame extending in a longitudinal direction of the vehicle body, a front pillar disposed above a rear part of the front side frame, and a lower side frame extending from a bottom end of the front pillar toward the front of the vehicle body and disposed on a lateral outer side of the front side frame. A front end of the front side frame and a front end of the lower side frame are connected with each other, and a bumper beam is supported at the thus connected front ends of the front side frame and the lower side frame.

The vehicle front body structure shown in JP-A 2007-190964 is particularly suitable for use in sedan or saloon cars, which can provide a relatively large space between the front end of the front side frame and a bumper face for installation of a bumper beam extension or an impact absorber. However, in case of light vehicles especially box-type light vehicles, only a small space is available in a longitudinal direction of the vehicle between the front end of a front side frame and a bumper face for the purpose of installation of a safety plate bonded to the front end of a bumper beam, or of an impact absorbing structure disposed between the front end of the front side frame and the bumper face. The front body structure shown in JP 2007-190964A cannot be used in the light vehicles without reconstruction.

Furthermore, the bumper beam extension used in the vehicle front body structure disclosed in JP-A 2007-190964 is designed to produce an unyielding portion, which remains unyielding when the bumper beam extension is subjected to a collision with an oncoming vehicle. Due to the provision of the unyielding portion, the disclosed bumper beam extension requires a relatively large space in the longitudinal direction of the vehicle for installation thereof. It is, therefore, practically impossible for the disclosed bumper beam extension to be installed in a relatively small space and, even if installation of such bumper beam extension were made, a sufficient impact-absorbing stroke would not be attainable.

An alternative attempt to provide an impact absorber in the light vehicles may include reduction of the rigidity of the bumper beam, however, the attempted bumper beam of reduced rigidity will fail to perform a load-transmitting function, which is required when an offset collision occurs, in order to reduce deformation of a crashed side of the vehicle.

FR 2,170,158 shows a motor vehicle front end construction having longitudinal support girders which adjoin the form-rigid passenger center cell. The longitudinal girders have a connecting part (deformation member) being attached to a front end of the longitudinal girders and being angularly bent toward the outside of the vehicle. A bumper is connected with the deformation member by way of bent leaf-springs.

The present invention seeks to provide a vehicle front body structure, which is capable of performing a sufficient impact energy absorbing function even when it is employed in a vehicle that is hard to provide a large space between the front end of a front side frame and a bumper face.

According to the present invention, there is provided a vehicle front body structure including right and left side frames extending in a longitudinal direction of the vehicle body, and a high-rigidity plate member disposed forwardly of front ends of the right and left side frames and extending in a width direction of the vehicle body, characterized in that the high-rigidity plate member is connected via a low-rigidity plate member to the front end of each of the right and left side frames, the low-rigidity plate member having a rigidity smaller than a rigidity of the high-rigidity plate member, wherein the low-rigidity plate member includes a transverse wall connected to the high-rigidity plate member and extending in the width direction of the vehicle body, and a vertical longitudinal wall (in the following also referred to as "longitudinal wall" or "vertical wall") extending from the transverse wall in the longitudinal direction of the vehicle body toward the front end of the right or left side frame in such a manner as to form a bent portion between the transverse wall and the vertical wall and connected to the front end of the right or left side frame, and wherein when the high-rigidity plate member is subjected to a collision load, the low-rigidity plate member is deformable to start distorting at the bent portion to thereby absorb the collision load.

With this arrangement, when the vehicle front body structure is subjected to a relatively small collision load which may occur at a collision with a relatively soft object such as a pedestrian, the low-rigidity plate member solely undergoes deformation or yielding to thereby absorb the collision load while the high-rigidity plate member remains undeformed. In this instance, the low-rigidity plate member starts distorting at the bent portion to cause the longitudinal wall to tilt down in a lateral inward direction of the vehicle body as the bent portion moves in the same direction as the tilting movement of the longitudinal wall. With this tiling movement of the longitudinal wall, the collision load can be absorbed.

Furthermore, since the low-rigidity plate member has a one-piece structure press-formed from a metal sheet, the longitudinal wall of the low-rigidity plate member is yieldable in its entirety without leaving an unyielding portion when the low-rigidity plate member is subjected to the collision load. Using such longitudinal wall enables a reduction in size of the low-rigidity plate member in the longitudinal direction of the vehicle body. The low-rigidity plate member (bumper beam extension) and the high-rigidity plate member (bumper beam) used in combination are able to perform a sufficiently large impact energy function when used in light vehicles that can provide only a relatively small installation space defined between the front ends of the right and left side frames and a bumper face disposed forwardly of the high-rigidity plate member (bumper beam).

The longitudinal wall of the low-rigidity plate member extends at an obtuse angle to the transverse wall such that a front end of the longitudinal wall is disposed inwardly of a rear end of the longitudinal wall as viewed in the width direction of the vehicle body. With this arrangement, a collision load applied to the high-rigidity plate member at right angles to the latter will cause the vertical wall to tilt in the lateral inward direction of the vehicle body. Thus, the collision load is transmitted via the high-rigidity plate member (bumper beam) to the right and left side frames. This arrangement is particularly advantageous when an offset head-on collision occurs because the collision load can be efficiently distributed via the high-rigidity plate member to the right and left side frames. As a result, the impact absorbing efficiency of the vehicle front body structure increases sufficiently.

In one preferred form of the invention, each of the right and left side frames has an end flange extending from the front end thereof in a lateral outward direction of the vehicle body, and the low-rigidity plate member further has an end flange extending from an end of the vertical wall in a lateral outward direction of the vehicle body, the end flange of the low-rigidity plate member being attached to the end flange of the right or left side frame. With this arrangement, since the low-rigidity plate member is connected to the right or left side frame on a lateral outer side thereof, when the high-rigidity plate member is subjected to a large collision load which may occur at a collision with a hard object such as an oncoming vehicle, the high-rigidity plate member while being displaced backwards during collision is supported by the side frames, and the large collision load can thus be born by the side frames. Furthermore, by connecting the low-rigidity plate member and the right or left side frame on the lateral outer side of the side frame, it is possible to maintain a necessary area of the transverse wall even when the vertical wall is arranged at the obtuse angle to the transverse wall. This arrangement allows the transverse wall to have a tow-hook insertion through-hole.

Preferably, the transverse wall of the low-rigidity plate member has a U-shape or a hat-like shape in cross section. The transverse wall having such cross-sectional shape can retain a sufficient degree of rigidity, which is large enough to ensure that the low-rigidity plate member starts distorting at the bent portion to cause tilting of the longitudinal wall in the lateral inward direction of the vehicle body when a collision load acts on the high-rigidity plate member.

It is preferable that the low-rigidity plate member is removably connected to the high-rigidity plate member. When subjected to a relatively small collision load which may occur during a collision with a relatively soft object such as a pedestrian, only the low-rigidity plate member of the vehicle front body structure undergoes plastic deformation or collapsing for absorbing the collision load. In such instance, by replacing the collapsed low-rigidity plate member with a new low-rigidity plate member, the vehicle front body structure can be repaired easily at a relatively low cost. A further advantage attainable by the replaceable arrangement of the low-rigidity plate member is that the vehicle front body structure can be used for another type of vehicle by merely adjusting the strength and rigidity of the low-rigidity plate member. The compatibility of the vehicle front body structure can thus be increased.

One preferred structural embodiment of the present invention will be described in detail herein below, by way of example only, with reference to the accompanying sheets of drawings, in which:
FIG. 1 is a top plan view of a vehicle front body structure according to a preferred embodiment of the present invention;
FIG. 2 is a horizontal cross-sectional view of the vehicle front body structure;
FIG. 3 is a perspective view showing a part of the vehicle front body structure including a high-rigidity plate member and a low-rigidity plate member connected together;
FIG. 4 is an enlarged perspective view of the low-rigidity plate member of the vehicle front body structure; and
FIG. 5 is a horizontal cross-sectional view illustrative of the operation of the vehicle front body structure.

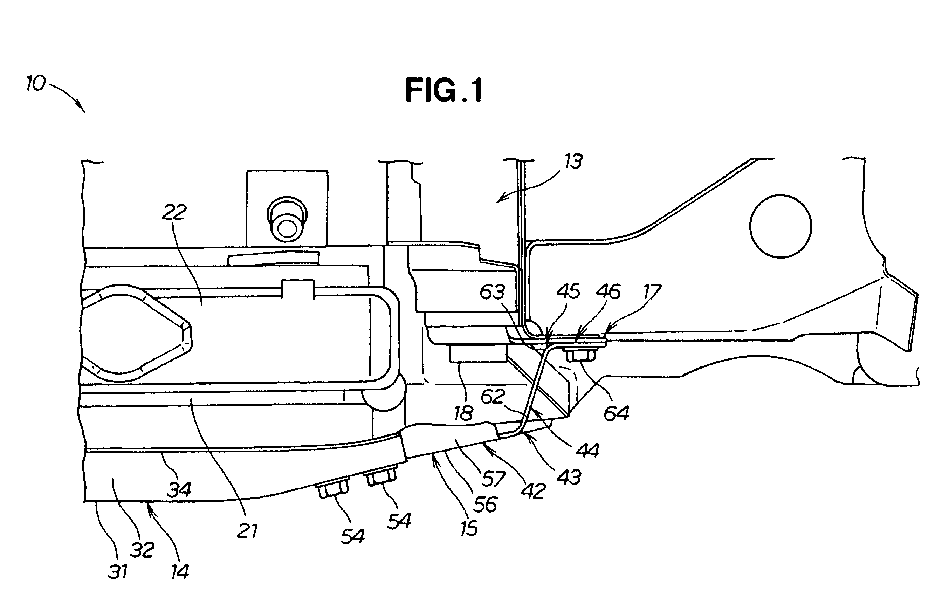

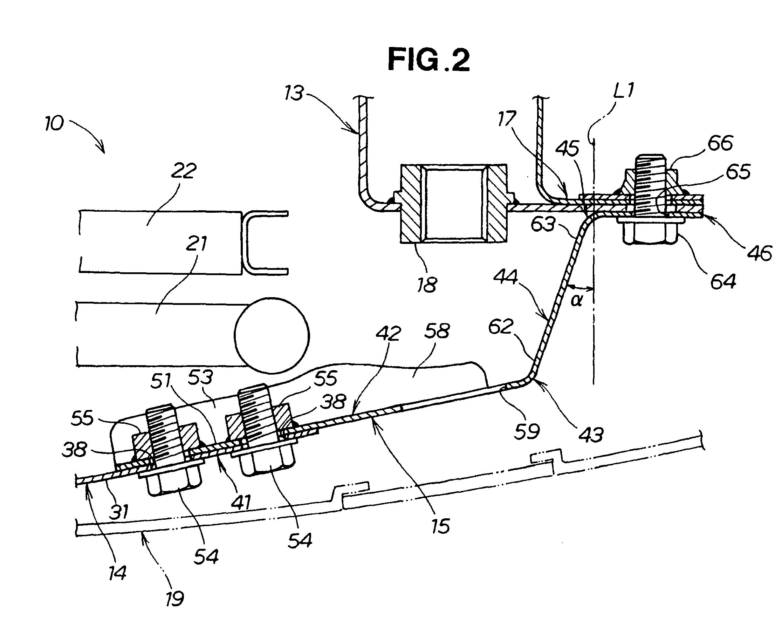

Referring now to the drawings and FIGS. 1 and 2 in particular, there is shown a vehicle front body structure 10 according to a preferred embodiment of the present invention. The vehicle front body structure 10 generally comprises right and left side frames 13 (only the left side frame being shown) extending in a longitudinal direction of the vehicle body, a high-rigidity plate member 14 disposed forwardly of front ends of the right and left side frames 13 and extending in a transverse or width direction of the vehicle body, and a low-rigidity plate member 15 disposed between the high-rigidity plate member 14 and the front end of the right or left side frame 13 and connecting the high-rigidity plate member 14 to the front end of the right or left side frame 13.

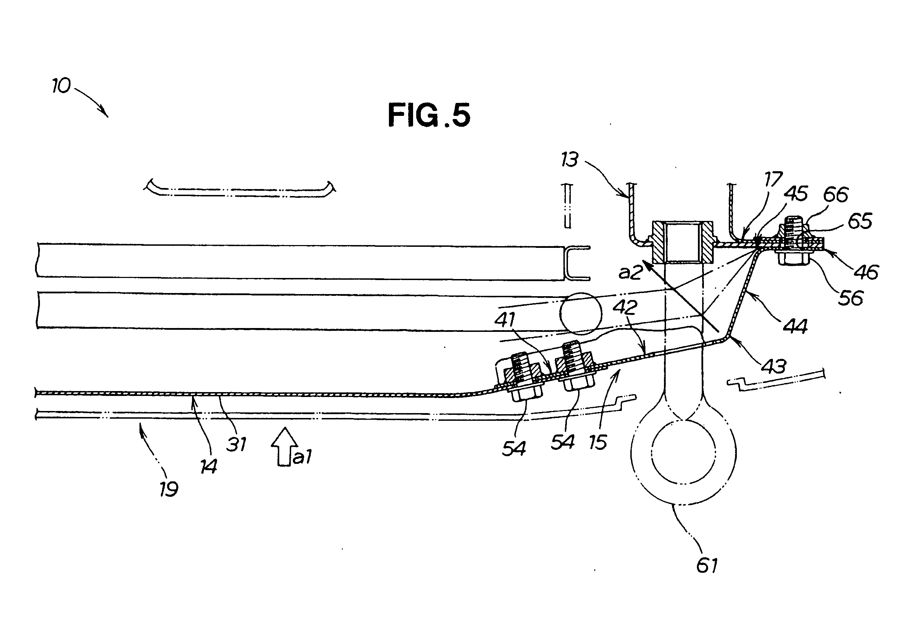

Each of the right and left side frames 13 has an end flange 17 extending from the front end of the side flange 13 in a lateral outward direction of the vehicle body for attachment to the low-rigidity plate member 15, and a nut 18 for connection with a tow-hook 61 (FIG. 5).

In the illustrated embodiment, the high-rigidity plate member 14 is a bumper beam, and the low-rigidity plate member 15 is a bumper beam extension disposed between the bumper beam 14 and the end flange 17 of the right or left side frame 13.

The vehicle front body structure 10 also includes a bumper face 19 (FIG. 2) disposed forwardly of the high-rigidity plate member (bumper beam) 14. A condenser 21 for storing a refrigerant of a vehicle air conditioner system and a radiator 22 for cooling an engine are disposed in the named order behind the high-rigidity plate member 14.

As shown in FIGS. 2-4, the high-rigidity plate member 14 is a one-piece press-formed elongated beam having a hat-like shape in cross section. The high-rigidity plate member 14 includes a front wall 31 forming a beam body of the high-rigidity plate member 14, upper and lower horizontal walls 32 and 33 extending rearwards from upper and lower edges of the front wall 31, and upper and lower vertical flanges 34 and 34 extending from rear edges of the upper and lower horizontal walls 32, 33.

The front wall (beam body) 31 has left and right reinforcement ribs 36 and 37 disposed in longitudinal alignment on left and right portions, respectively, of the front wall 31, and a pair of through-holes 38, 38 (FIG. 2) formed in each of left and right end portions of the front wall 31 for attachment of the low-rigidity plate member 15. The through-holes 38, 38 are disposed in lateral juxtaposition.

The low-rigidity plate member (bumper beam extension) 15 has a press-formed one-piece structure and includes a attachment portion 41 (FIG. 2) adapted to be connected to the high-rigidity plate member 14, a transverse wall 42 extending continuously from the attachment portion 41 in a lateral outward direction (i.e., a widthwise outward direction) of the vehicle body, a vertical wall 44 extending continuously rearwards from an outer end of the transverse wall 42 in the longitudinal direction of the vehicle body toward the front end of the corresponding side frame 13 (left side frame in the illustrated embodiment) while forming a bent portion 43 between the transverse wall 42 and the longitudinal wall 44, and an end flange 46 extending from a rear end 63 of the longitudinal wall 44 in a lateral outward direction of the vehicle body for attachment to the end flange 17 of the side frame 13.

The low-rigidity plate member (bumper beam extension) 15 is removably connected to the high-rigidity plate member (bumper beam) 14. The right low-rigidity plate member 15 is configured in symmetric relation to the left low-rigidity plate member 15 about a longitudinal centerline of the vehicle, and a further description of the right low-rigidity plate member 15 can be omitted.

The attachment portion 41 of the low-rigidity plate member 15 is formed as an integral end portion of the transverse wall 42 and has a U-shape in cross section. The U-shaped attachment portion 41 includes a front wall section 51 and upper and lower horizontal wall sections 53 (only the lower wall section being shown in FIG. 2) extending rearwards from upper and lower edges of the front wall section 51. The attachment portion 41 has a pair of through-holes (not designated) and a pair of nuts 55, 55 (FIG. 2) concentrically with the respective through-holes and welded to the rear surface of the front wall section 51, so that by threading a pair of bolts 54 from the through-holes 38 (FIG. 2) of the high-rigidity plate member 15 into the nuts 55, the low-rigidity plate member 15 can be attached to the high-rigidity plate member 14.

The transverse wall 42 including the attachment portion 41 as one end portion thereof also has a U-shape in cross section. The U-shaped transverse wall 42 includes a front wall section 56 and upper and lower horizontal wall sections 57 and 58 extending rearwards from upper and lower edges of the front wall section 56. The transverse wall 42 has a through-hole 59 formed in the front wall section 56 for the passage therethrough of the tow hook 61 (FIG. 5).

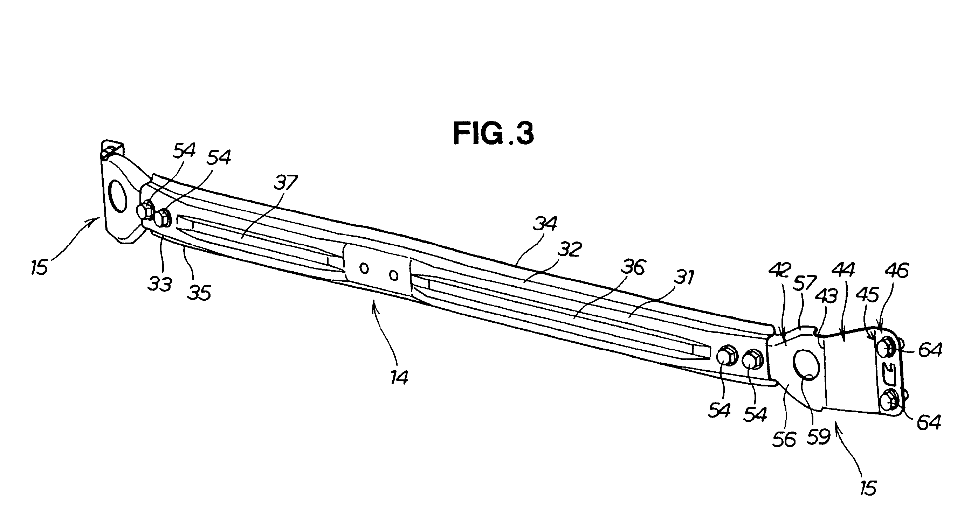

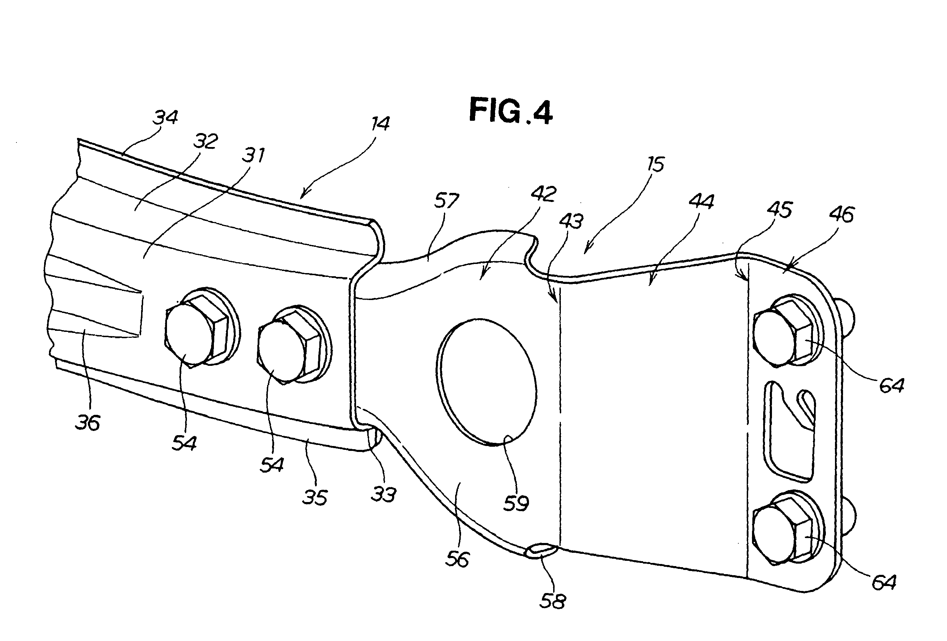

As shown in FIGS. 3 and 4, the transverse wall 42 is formed to flare in the lateral outward direction of the vehicle body and, hence, has a width gradually increased in the lateral outward direction of the vehicle body. The thus formed U-shaped transverse wall 42 is highly resistant to deformation and rigid as compared to the longitudinal wall 44.

The longitudinal wall 44 has a flat planar shape and extends at an obtuse angle to the transverse wall 42 so that a front end 62 of the longitudinal wall 44 disposed inwardly of the rear end 63 as viewed in the transverse or width direction of the vehicle body. The thus configured longitudinal wall 44 has a lower rigidity than the transverse wall 42 and is susceptible to deformation or yielding as compared to the transverse wall 42.

The end flange 46 of the low-rigidity plate member 15 is attached to the end flange 17 of the corresponding side frame 13 by a pair of bolts 64, 64. The end flange 46 has a pair of through-holes 65, 65 (FIG. 2) for the passage therethrough of the bolts 64, 64. The end flange 17 of the side frame 13 has a triple-ply laminated structure and has a pair of through holes (not designated) and a pair of nuts 66, 66 concentrically with the respective through-holes and welded to a rear surface of the end flange 17, so that by threading the bolts 64 from the through-holes 65 (FIG. 2) of the end flange 46 into the nuts 66, the low-rigidity plate member 15 can be attached to the side frame 13.

As shown in FIG. 2, the longitudinal wall 44 of the low-rigidity plate member (bumper beam extension) 15 is angled at an obtuse angle relative to the transverse wall 42. This arrangement may be said that the longitudinal wall 44 is inclined at an angle ∀ to a line L1 passing in the longitudinal direction of the vehicle through a junction (or bent portion) 45 between the longitudinal wall 44 and the end flange 46, the line L1 being parallel to the longitudinal centerline of the vehicle body.

By thus providing the inclination angle ∀ to the longitudinal wall 44, the longitudinal wall 44 is likely to tilt down in the lateral inward direction of the vehicle body when subjected to a collision load acting from the front of the vehicle body. For instance, if the inclination angle ∀ is zero (∀=0), the load bearing characteristic of the longitudinal wall 44 depends completely on the thickness of the longitudinal wall 44. Alternatively, if the inclination angle ∀ is greater than (∀>0), the load bearing characteristic of the longitudinal wall 44 can be determined by a combination of the thickness of the longitudinal wall 44 and the inclination angle ∀ of the longitudinal wall 44. By thus providing the inclination angle, it is possible to increase the degree of freedom in determining the load bearing characteristic of the longitudinal wall 44.

As shown in FIG. 5, when the high-rigidity plate member (bumper beam) 14 is subjected to a collision load acting from the front side thereof in an orthogonal direction as indicated by a profiled arrow a1, the vertical wall 44 starts deforming or yielding and tilts down in a lateral inward direction of the vehicle body as indicated by the arrow a2 while the bent portion acts as a starting point of tilting movement. With this deformation including tilting movement of the longitudinal wall 44, the low-rigidity plate member 15 can absorb the collision load.

The tilting movement of the longitudinal wall 44 is also able to offer another advantage that when the vehicle front body structure 10 is subjected to an offset head-on collision, a collision load applied to one of the right and left sides of the high-rigidity plate member (bumper beam) 15 is transmitted to the other side through the tilting movement of the longitudinal wall 11. As a consequence, the impact absorbing capacity of the front body structure can be increased.

It will be appreciated from the foregoing description that in the vehicle front body structure embodying the invention, the low-rigidity plate member (bumper beam extension) 15 is connected at one end to one of left and right ends of the high-rigidity plate member (bumper beam) 14 and, at the other end, to the front end of a corresponding one of the right and left side frame 13 via the end flange 46 attached to the end flange 17 of the side frame 13 projecting from the front end of the side frame 13 in a lateral outward direction of the side frame 13, and the longitudinal wall 44 of the low-rigidity plate member 15 extends at an obtuse angle relative to the transverse wall 42 so that a collision load can be absorbed as the longitudinal wall 44 undergoes deformation and tilting movement.

With the vehicle front body structure thus constructed, at the time of a light collision, which may occur when the vehicle body collides with a soft object such as a pedestrian, the collision load can be efficiently absorbed as the longitudinal wall 44 undergoes deformation and tilting movement. At the end of the collision, the longitudinal wall 44 of the low-rigidity plate member 15 lies in front of the front end of the corresponding side frame 13 and does not form an undeformed portion, which is produced in the case of the conventional bumper beam extension of a tubular shape. By virtue of the longitudinal wall 44, it is possible to reduce the overall size of the low-rigidity plate member (bumper beam extension) in the longitudinal direction of the vehicle body. Furthermore, because of the longitudinal wall 44 angled at an obtuse angle to the transverse wall 43 (or inclined at an angle to the longitudinal centerline of the vehicle body with the front end 62 disposed inwardly of the rear end 63 as viewed in the width direction of the vehicle body), the low-rigidity plate member 15 is able to transmit a collision load from one end to the other end of the high-rigidity plate member (bumper beam) 14 when the vehicle front body structure is subjected to an offset head-on collision.

Furthermore, to cope with a collision with a hard object such as a building, an oncoming vehicle and so on, the low-rigidity plate member (bumper beam extension) 15 is configured to have a sufficient cross sectional area, which is large enough to prevent the high-rigidity plate member 14 from rupturing under the effect of the collision load, and the low-rigidity plate member 15 is connected to the front end of the corresponding side frame 13 on a lateral outer side of the side frame 13 as viewed from the width direction of the vehicle body. With this arrangement, the high-rigidity plate member 14 moving backward during collision is reliably supported by the side frames while keeping a desired coupling rigidity between the high-rigidity plate member 14 and the side frames 13 via the low-rigidity plate members 15.

As thus far described, the vehicle body structure according to the present invention includes right and left side frames 13 extending in a longitudinal direction of the vehicle body, and a high-rigidity plate member 14 disposed forwardly of front ends of the right and left side frames 13 and extending in a width direction of the vehicle body. The high-rigidity plate member 14 is connected to the front end of each of the right and left side frames via a low-rigidity plate member 15, which has a rigidity smaller than a rigidity of the high-rigidity plate member 14. The low-rigidity plate member 15 includes a transverse wall 42 connected to the high-rigidity plate member 14 and extending in the width direction of the vehicle body, and a longitudinal wall 44 extending from the transverse wall 42 in the longitudinal direction of the vehicle body toward the front end of the light or left side frame 13 in such a manner as to form a bent portion 43 between the transverse wall 42 and the vertical wall 44, the vertical wall 44 being connected to the front end of the right or left side frame 13. When the high-rigidity plate member 14 is subjected to a collision load, the low-rigidity plate member 15 is deformable to start distorting at the bent portion 43 to thereby absorb the collision load.

When subjected to a relatively small collision load which may occur at a collision with a soft object such as a pedestrian, the low-rigidity plate member 15 solely undergoes deformation or yielding to thereby absorb the collision load while the high-rigidity plate member remains undeformed. In this instance, the low-rigidity plate member 15 starts distorting at the bent portion 43 to cause the longitudinal wall 44 to tilt in a lateral inward direction of the vehicle body and absorbs the collision load as the bent portion 43 moves in the same direction as the tilting movement of the transverse wall 42.

Furthermore, since the low-rigidity plate member 15 has a one-piece structure press-formed from a metal sheet, the longitudinal wall 44 of the low-rigidity plate member 15 is yieldable in its entirety without leaving an unyielding portion when the low-rigidity plate member 15 is subjected to the collision load. Using such longitudinal wall 44 enables a reduction in size of the low-rigidity plate member 15 in the longitudinal direction of the vehicle body. The low-rigidity plate member (bumper beam extension) 15 and the high-rigidity plate member (bumper beam) 14 used in combination are able to perform a sufficiently large impact energy function when used in light vehicles that can provide only a relatively small installation space defined between the front ends of the right and left side frames 13 and a bumper face 19 disposed forwardly of the high-rigidity plate member (bumper beam) 14.

In the vehicle front body structure 10 of the present invention, the longitudinal wall 44 of the low-rigidity plate member 15 is arranged to extend at an obtuse angle to the transverse wall 42 (or at an angle to a longitudinal centerline of the vehicle body) such that a front end 62 of the longitudinal wall 44 is disposed inwardly of a rear end 63 of the longitudinal wall 44 as viewed in the width direction of the vehicle body. With this arrangement, a collision load applied to the high-rigidity plate member 15 at right angles to the latter will cause the vertical wall 44 to tilt in the lateral inward direction of the vehicle body. Thus, the collision load is transmitted via the high-rigidity plate member (bumper beam) 14 the right and left side frames. This arrangement is particularly advantageous when an offset head-on collision occurs because the collision load acting on one side of the high-rigidity plate member 14 can be efficiently distributed via the high-rigidity plate member 14 to the right and left side frames 13. As a result, the impact absorbing efficiency of the vehicle front body structure 10 increases sufficiently.

Each of the right and left side frames 13 has an end flange 17 extending from the front end thereof in the lateral outward direction of the vehicle body, and the low-rigidity plate member 15 has an end flange 46 extending from the rear end 63 of the vertical wall 44 in the lateral outward direction of the vehicle body. The end flange 46 of the low-rigidity plate member 15 is attached to the end flange 17 of the right or left side frame 13. With this arrangement, since the low-rigidity plate member 15 is connected to the right or left side frame 13 on a lateral outer side thereof, when the high-rigidity plate member 14 is subjected to a large collision load which may occur at a collision with a hard object such as an oncoming vehicle, the high-rigidity plate 14 while being displaced backwards during collision is supported by the side frames 13. The large collision load can thus be born by the side frames. Furthermore, by connecting the low-rigidity plate member 15 and the right or left side frame 13 on the lateral outer side of the side frame 13, it is possible to maintain a necessary area of the transverse wall 42 even when the vertical wall 44 is arranged at the obtuse angle to the transverse wall 42. This arrangement allows the transverse wall 42 to have a through-hole 59 for the passage therethrough of a tow hook 61 (FIG. 5).

Furthermore, since the transverse wall 42 of the low-rigidity plate member 15 has a U-shape or a hat-like shape in cross section, the rigidity of the transverse wall 42 is sufficiently large enough to ensure that the low-rigidity plate member 15 is able to start distorting at the bent portion 43 to cause tilting of the longitudinal wall in the lateral inward direction of the vehicle body when a collision load acts on the high-rigidity plate member 14. This arrangement adds to the impact energy absorbing efficiency of the vehicle front body structure 10.

The low-rigidity plate member 15, which is removably connected to the high-rigidity plate member 14, is advantageous because during collision with a relatively small collision load, only the low-rigidity plate member 15 of the vehicle front body structure 10 undergoes plastic deformation or collapsing to thereby absorb the collision load. In such instance, by replacing the collapsed low-rigidity plate member 15 with a new low-rigidity plate member, it is possible to repair the vehicle front body structure 10 easily at a relatively low cost. A further advantage attainable by the replaceable arrangement of the low-rigidity plate member 15 is that the vehicle front body structure 10 can be used for another type of vehicle by merely adjusting the strength and rigidity of the low-rigidity plate member 15. The compatibility of the vehicle front body structure 10 can thus be increased.

Although in the illustrated embodiment, the transverse wall 42 of the low-rigidity plate member (bumper beam extension) 15 has a U-shape in cross section, a hat-like shape in cross section may be used for the transverse wall 42. Furthermore, the high-rigidity plate member (bumper beam) 14 and the low-rigidity plate member (bumper beam extension) 15 are preferably configured to have a section modulus, which is sufficient large enough to withstand a tensile load that may be produced during ordinal off-set head-on collision. With this arrangement, when an offset head-on collision occurs, a collision load acting on one side of the high-rigidity plate member 14 is distributed via the high-rigidity plate member 14 to both of the right and left side frames 13. As a result, the vehicle front body structure 10 can achieve an improved impact absorbing operation without causing deformation of either side frame 13.

## Claims

1. A vehicle front body structure including right and left side frames (13) extending in a longitudinal direction of the vehicle body, and a high-rigidity plate member (14) disposed forwardly of front ends of the right and left side frames (13) and extending in a width direction of the vehicle body, **characterized in that** the high-rigidity plate member (14) is connected via a low-rigidity plate member (15) to the front end of each of the right and left side frames (13), the low-rigidity plate member (15) having a rigidity smaller than a rigidity of the high-rigidity plate member (14), wherein the low-rigidity plate member (15) includes a transverse wall (42) connected to the high-rigidity plate member (14) and extending in the width direction of the vehicle body, and a vertical longitudinal wall (44) extending from the transverse wall (42) in the longitudinal direction of the vehicle body toward the front end of the right or left side frame (13) in such a manner as to form a bent portion (43) between the transverse wall (42) and the vertical longitudinal wall (44) and connected to the front end of the right or left side frame (13), and wherein when the high-rigidity plate member (14) is subjected to a collision load, the low-rigidity plate member (15) is deformable to start distorting at the bent portion (43) to thereby absorb the collision load, and
wherein the vertical longitudinal wall (44) extends at an obtuse angle to the transverse wall (42) such that a front end (62) of the vertical longitudinal wall (44) is disposed inwardly of a rear end (63) of the vertical longitudinal wall (44) as viewed in the width direction of the vehicle body.

2. The vehicle front body structure according to claim 1, wherein each of the right and left side frames (13) has an end flange (17) extending from the front end thereof in a lateral outward direction of the vehicle body, and the low-rigidity plate member (15) further has an end flange (46) extending from an end of the vertical longitudinal wall (44) in a lateral outward direction of the vehicle body, the end flange (46) of the low-rigidity plate member (15) being attached to the end flange (17) of the right or left side frame (13).

3. The vehicle front body structure according to one of claims 1 or 2, wherein the transverse wall (42) of the low-rigidity plate member (15) has a U-shape or a hat-like shape in cross section.

4. The vehicle front body structure according to one of claims 1 to 3, wherein the low-rigidity plate member (15) is removably connected to the high-rigidity plate member (14).

5. The vehicle front body structure according to one of claims 1 to 4, wherein the low-rigidity plate member (15) is removably connected to the right and left side frames (13).

## Patentansprüche

1. Fahrzeugfrontkarosseriestruktur, welche rechte und linke Seitenrahmen (13) umfasst, welche sich in einer Längsrichtung der Fahrzeugkarosserie erstrecken, und ein hochfestes Plattenelement (14), welches vor vorderen Enden der rechten und linken Seitenrahmen (13) angeordnet ist und sich in einer Breitenrichtung der Fahrzeugkarosserie erstreckt, **dadurch gekennzeichnet, dass** das hochfeste Plattenelement (14) über ein Plattenelement geringer Festigkeit (15) mit dem vorderen Ende von jedem der rechten und linken Seitenrahmen (13) verbunden ist, wobei das Plattenelement geringer Festigkeit (15) eine Festigkeit aufweist, welche geringer als die Festigkeit des hochfesten Plattenelements (14) ist, wobei das Plattenelement geringer Festigkeit (15) eine Querwand (42), welche mit dem hochfesten Plattenelement (14) verbunden ist, und welche sich in der Breitenrichtung der Fahrzeugkarosserie erstreckt, und eine vertikale Längswand (44) umfasst, welche sich von der Querwand (42) in der Längsrichtung der Fahrzeugkarosserie in Richtung zu dem vorderen Ende der rechten oder linken Seitenrahmen (13) auf solch eine Weise erstreckt, um einen gebogenen Abschnitt (43) zwischen der Querwand (42) und der vertikalen Längswand (44) zu bilden und mit dem vorderen Ende der rechten oder linken Seitenrahmen (13) verbunden ist, und wobei, wenn das hochfeste Plattenelement (14) einer Kollisionsbelastung unterworfen wird, das Plattenelement geringer Festigkeit (15) deformierbar ist, um an dem gebogenen Abschnitt (43) zu beginnen, zu verzerren, um **dadurch** die Kollisionsbelastung zu absorbieren, und
wobei sich die vertikale Längswand (44) in einem stumpfen Winkel zu der Querwand (42) erstreckt, so dass ein vorderes Ende (62) der vertikalen Längswand (44) inwärts von einem hinteren Ende (63) der vertikalen Längswand (44) gesehen in der Breitenrichtung der Fahrzeugkarosserie angeordnet ist.

2. Fahrzeugfrontkarosseriestruktur gemäß Anspruch 1, wobei jeder von den rechten und linken Seitenrahmen (13) einen Endflansch (17) aufweist, welcher sich von dem vorderen Ende davon in einer lateralen nach außen gerichteten Richtung der Fahrzeugkarosserie erstreckt, und wobei das Plattenelement geringer Festigkeit (15) weiterhin einen Endflansch (46) aufweist, welcher sich von einem Ende der vertikalen Längswand (44) in einer lateralen nach außen gerichteten Richtung der Fahrzeugkarosserie erstreckt, wobei der Endflansch (46) des Plattenelements geringer Festigkeit (15) an dem Endflansch (17) des rechten oder linken Seitenrahmens (13) angebracht ist.

3. Fahrzeugfrontkarosseriestruktur gemäß irgendeinem der Ansprüche 1 oder 2, wobei die Querwand (42) des Plattenelements geringer Festigkeit (15) eine U-Form oder eine hutartige Form im Querschnitt aufweist.

4. Fahrzeugfrontkarosseriestruktur gemäß irgendeinem der Ansprüche 1 bis 3, wobei das Plattenelement geringer Festigkeit (15) entfernbar an dem hochfesten Plattenelement (14) verbunden ist.

5. Fahrzeugfrontkarosseriestruktur gemäß irgendeinem der Ansprüche 1 bis 4, wobei das Plattenelement geringer Festigkeit (15) entfernbar an den rechten und linken Seitenrahmen (13) verbunden ist.

## Revendications

1. Structure de corps avant de véhicule comprenant des châssis latéraux droit et gauche (13) s'étendant dans une direction longitudinale du corps de véhicule, et un élément de plaque à haute rigidité (14) disposé vers l'avant des extrémités avant des châssis latéraux droit et gauche (13) et s'étendant dans le sens de la largeur du corps de véhicule, **caractérisée en ce que** l'élément de plaque à haute rigidité (14) est raccordé via un élément de plaque à faible rigidité (15) à l'extrémité avant de chacun des châssis latéraux droit et gauche (13), l'élément de plaque à faible rigidité (15) ayant une rigidité inférieure à une rigidité de l'élément de plaque à haute rigidité (14), dans laquelle l'élément de plaque à faible rigidité (15) comprend une paroi transversale (42) raccordée à l'élément de plaque à haute rigidité (14) et s'étendant dans le sens de la largeur du corps de véhicule, et une paroi longitudinale verticale (44) s'étendant à partir de la paroi transversale (42) dans la direction longitudinale du corps de véhicule vers l'extrémité avant du châssis latéral droit ou gauche (13) afin de former une partie pliée (43) entre la paroi transversale (42) et la paroi longitudinale verticale (44) et raccordée à l'extrémité avant du châssis latéral droit ou gauche (13), et dans laquelle lorsque l'élément de plaque à haute rigidité (14) est soumis à une charge de collision, l'élément de plaque à faible rigidité (15) est déformable afin de commencer à se déformer au niveau de la partie pliée (43) pour absorber ainsi la charge de collision, et
dans laquelle la paroi longitudinale verticale (44) s'étend selon un angle obtus par rapport à la paroi transversale (42) de sorte qu'une extrémité avant (62) de la paroi longitudinale verticale (44) est disposée vers l'intérieur d'une extrémité arrière (63) de la paroi longitudinale verticale (44), telle qu'observée dans le sens de la largeur du corps de véhicule.

2. Structure de corps avant de véhicule selon la revendication 1, dans laquelle chacun des châssis latéraux droit et gauche (13) a un rebord d'extrémité (17) s'étendant à partir de son extrémité avant dans une direction latérale vers l'extérieur du corps de véhicule, et l'élément de plaque à faible rigidité (15) a en outre un rebord d'extrémité (46) s'étendant à partir d'une extrémité de la paroi longitudinale verticale (44) dans une direction latérale vers l'extérieur du corps de véhicule, le rebord d'extrémité (46) de l'élément de plaque à faible rigidité (15) étant fixé sur le rebord d'extrémité (17) du châssis latéral droit ou gauche (13).

3. Structure de corps avant de véhicule selon l'une quelconque des revendications 1 ou 2, dans laquelle la paroi transversale (42) de l'élément de plaque à faible rigidité (15) a une forme de U ou une forme de chapeau en coupe transversale.

4. Structure de corps avant de véhicule selon l'une quelconque des revendications 1 à 3, dans laquelle l'élément de plaque à faible rigidité (15) est raccordé de manière amovible à l'élément de plaque à haute rigidité (14).

5. Structure de corps avant de véhicule selon l'une quelconque des revendications 1 à 4, dans laquelle l'élément de plaque à faible rigidité (15) est raccordé de manière amovible aux châssis latéraux droit et gauche (13).
